(19) Europäisches Patentamt / European Patent Office / Office européen des brevets

(11) **EP 4 300 628 A1**

(12) **EUROPEAN PATENT APPLICATION**
published in accordance with Art. 153(4) EPC

(43) Date of publication:
**03.01.2024 Bulletin 2024/01**

(21) Application number: **22861623.1**

(22) Date of filing: **17.08.2022**

(51) International Patent Classification (IPC):
$H01M\ 4/36$ (2006.01)   $H01M\ 4/525$ (2010.01)
$H01M\ 4/505$ (2010.01)   $H01M\ 4/62$ (2006.01)
$H01M\ 10/052$ (2010.01)   $C01G\ 53/00$ (2006.01)

(52) Cooperative Patent Classification (CPC):
C01G 53/00; H01M 4/36; H01M 4/505;
H01M 4/525; H01M 4/62; H01M 10/052;
Y02E 60/10

(86) International application number:
**PCT/KR2022/012295**

(87) International publication number:
**WO 2023/027413 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.08.2021  KR 20210112328**

(71) Applicant: **LG Chem, Ltd.**
**Seoul 07336 (KR)**

(72) Inventors:
• **KWAK, No Woo**
  **Daejeon 34122 (KR)**
• **AHN, Dong Joon**
  **Daejeon 34122 (KR)**
• **EOM, Jun Ho**
  **Daejeon 34122 (KR)**
• **LEE, Jun Won**
  **Daejeon 34122 (KR)**
• **LIM, Chae Jin**
  **Daejeon 34122 (KR)**
• **PARK, Na Ri**
  **Daejeon 34122 (KR)**
• **KIM, Ji Hye**
  **Daejeon 34122 (KR)**
• **JUNG, Byoung Hun**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE MATERIAL, METHOD FOR PREPARING SAME, AND LITHIUM SECONDARY BATTERY COMPRISING SAME**

(57)     The present invention relates to a positive electrode material, wherein it is a positive electrode material having a bimodal particle size distribution which includes a first positive electrode active material and a second positive electrode active material which have different average particle diameters ($D_{50}$) from each other, wherein the first positive electrode active material includes a lithium composite transition metal oxide, and the number of primary particles of the first positive electrode active material, which is measured in a cross-sectional SEM image of secondary particles having an average particle diameter ($D_{50}$) at which a maximum peak of area cumulative particle size distribution of the first positive electrode active material, which is measured through a laser diffraction particle size measurement instrument, appears, is in a range of 6 or more to 30 or less, a preparation method thereof, and a lithium secondary battery including the positive electrode material.

FIG. 1

EP 4 300 628 A1

**Description**

**TECHNICAL FIELD**

[Cross-reference to Related Applications]

This application claims priority from Korean Patent Application No. 10-2021-0112328, filed on August 25, 2021, the disclosure of which is incorporated by reference herein.

[Technical Field]

The present invention relates to a positive electrode material having a bimodal particle size distribution which includes positive electrode active materials having different average particle diameters ($D_{50}$), a preparation method thereof, and a lithium secondary battery including the positive electrode material.

**BACKGROUND ART**

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide ($LiCoO_2$), lithium nickel oxide ($LiNiO_2$), lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide ($LiCoO_2$) has been widely used because of its high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel cobalt manganese-based lithium composite transition metal oxide (hereinafter, simply referred to as 'NCM-based lithium composite transition metal oxide'), in which a portion of cobalt (Co) is substituted with nickel (Ni) and manganese (Mn), has been developed. However, a conventionally developed NCM-based lithium composite transition metal oxide is generally in the form of a secondary particle in which primary particle are aggregated, wherein, since it has a large specific surface area, low particle strength, and a large amount of lithium by-product, there has been a problem in that an amount of gas generated is large during cell operation and stability is poor. As described above, the conventionally developed NCM-based lithium composite transition metal oxide had limitations particularly in application to high-voltage batteries because stability was not ensured. Also, it is necessary to increase rolling density in order to increase capacity per unit volume of the electrode, wherein the conventionally developed NCM-based lithium composite transition metal oxide had a problem in that resistance was increased due to severe particle cracking during rolling and gas was generated.

Particularly, with respect to a high nickel (high-Ni) NCM-based lithium composite transition metal oxide in which an amount of nickel (Ni) is increased to ensure high capacity, structural and chemical stability is further reduced, and it is more difficult to secure thermal stability. Furthermore, such a high nickel NCM-based lithium composite transition metal oxide has a problem in that long-term lifetime is reduced due to a phenomenon of particle cracking after rolling.

[Prior Art Documents]

[Patent Document]

(Patent Document 1) KR 10-2014-0018685 A

## DISCLOSURE OF THE INVENTION

### TECHNICAL PROBLEM

An aspect of the present invention provides a positive electrode material in which crack generation and particle cracking of the positive electrode material including a high nickel (high-Ni) lithium composite transition metal oxide are improved.

Another aspect of the present invention provides a positive electrode material, in which long-term lifetime is improved by reducing a side reaction with an electrolyte solution by reducing a surface area exposed after rolling through mitigation of the crack generation and particle cracking of the positive electrode material, and a method of preparing the same.

### TECHNICAL SOLUTION

In order to solve the above-described tasks, the present invention provides a positive electrode material, a method of preparing a positive electrode material, a positive electrode, and a lithium secondary battery.

(1) The present invention provides a positive electrode material having a bimodal particle size distribution which includes a first positive electrode active material and a second positive electrode active material which have different average particle diameters ($D_{50}$) from each other, wherein the first positive electrode active material includes a lithium composite transition metal oxide represented by Formula 1, and a number of primary particles of the first positive electrode active material, which is measured in a cross-sectional scanning electron microscope (SEM) image of secondary particles having an average particle diameter ($D_{50}$) at which a maximum peak of area cumulative particle size distribution of the first positive electrode active material, which is measured through a laser diffraction particle size measurement instrument, appears, is in a range of 6 or more to 30 or less.

$$[\text{Formula 1}] \qquad Li_aNi_xCo_yM1_zM2_wO_2$$

In Formula 1, $M^1$ is at least one selected from Mn and Al, $M^2$ is at least one selected from the group consisting of Zr, B, W, Mo, Mg, Ce, Hf, Ta, Nb, La, Ti, Sr, Ba, F, P, Si, and S, and $0.9 \leq a \leq 1.1$, $0.7 \leq x < 1$, $0 < y \leq 0.2$, $0 < z \leq 0.2$, and $0 \leq w \leq 0.1$.

(2) The present invention provides the positive electrode material of (1) above, wherein the lithium composite transition metal oxide represented by Formula 1 is represented by Formula 1-1.

$$[\text{Formula 1-1}] \qquad Li_aNi_xCo_yMn_zM2_wO_2$$

In Formula 1-1, $M^2$ is at least one selected from the group consisting of Zr, B, W, Mo, Mg, Ce, Hf, Ta, Nb, La, Ti, Sr, Ba, F, P, Si, and S, and $0.9 \leq a \leq 1.1$, $0.7 \leq x < 1$, $0 < y \leq 0.2$, $0 < z \leq 0.2$, and $0 \leq w \leq 0.1$.

(3) The present invention provides the positive electrode material of (1) or (2) above, wherein the first positive electrode active material includes a coating layer which is formed on a surface of the lithium composite transition metal oxide and contains at least one element selected from the group consisting of Al, Ti, W, B, F, P, Mg, Ni, Co, Fe, Cr, V, Cu, Ca, Zn, Zr, Nb, Mo, Sr, Sb, Bi, Si, Ta, and S.

(4) The present invention provides the positive electrode material of any one of (1) to (3) above, wherein the second positive electrode active material includes a lithium composite transition metal oxide represented by Formula 2.

$$[\text{Formula 2}] \qquad Li_{a'}Ni_{x'}Co_{y'}M3_{z'}M4_{w'}O_2$$

In Formula 2, $M^3$ is at least one selected from Mn and Al, $M^4$ is at least one selected from the group consisting of Zr, B, W, Mo, Mg, Ce, Hf, Ta, Nb, La, Ti, Sr, Ba, F, P, Si, and S, and $0.9 \leq a' \leq 1.1$, $0.8 \leq x' < 1$, $0 < y' < 0.2$, $0 < z' < 0.2$, and $0 \leq w' \leq 0.1$.

(5) The present invention provides the positive electrode material of any one of (1) to (4) above, wherein the average particle diameter ($D_{50}$) of the first positive electrode active material is smaller than the average particle diameter ($D_{50}$) of the second positive electrode active material.

(6) The present invention provides the positive electrode material of any one of (1) to (5) above, wherein the first positive electrode active material has an average particle diameter ($D_{50}$) of 2 um or more and 7 um or less.

(7) The present invention provides the positive electrode material of any one of (1) to (6) above, wherein the second positive electrode active material has an average particle diameter ($D_{50}$) of greater than 7 um and equal to or less than 20 $\mu$m.

(8) The present invention provides the positive electrode material of any one of (1) to (7) above, wherein the positive electrode material has a particle size change amount calculated by Equation 1 of 6.0 or less.

$$[Equation\ 1]$$

$$Particle\ size\ change\ amount = P_0 - P_1$$

In Equation 1, $P_0$ is an intensity of a maximum peak appeared in an area cumulative particle size distribution graph of the positive electrode material, and $P_1$ is an intensity of a peak appeared in a region corresponding to a particle diameter of the $P_0$ peak in an area cumulative particle size distribution graph measured after pressurizing the positive electrode material to 9 tons.

(9) The present invention provides a method of preparing a positive electrode material which includes steps of: mixing a positive electrode active material precursor represented by Formula 3 and a lithium raw material and performing primary sintering to form a pre-sintered product (S10); performing secondary sintering on the pre-sintered product at a temperature of greater than 850°C and equal to or less than 890°C to form a first positive electrode active material including a lithium composite transition metal oxide represented by Formula 1 (S20); and mixing the first positive electrode active material with a second positive electrode active material having an average particle diameter ($D_{50}$) different from that of the first positive electrode active material (S30).

[Formula 1] $\qquad Li_aNi_xCo_yM^1_zM^2_wO_2$

In Formula 1, $M^1$ is at least one selected from Mn and Al, $M^2$ is at least one selected from the group consisting of Zr, B, W, Mo, Mg, Ce, Hf, Ta, Nb, La, Ti, Sr, Ba, F, P, Si, and S, and $0.9 \leq a \leq 1.1$, $0.7 \leq x < 1$, $0 < y \leq 0.2$, $0 < z \leq 0.2$, and $0 \leq w \leq 0.1$,

[Formula 3] $\qquad [Ni_xCo_yM^1_zM^2_w](OH)_2$

In Formula 3, $M^1$ is at least one selected from Mn and Al, $M^2$ is at least one selected from the group consisting of Zr, B, W, Mo, Mg, Ce, Hf, Ta, Nb, La, Ti, Sr, Ba, F, P, Si, and S, and $0.7 \leq x < 1$, $0 < y \leq 0.2$, $0 \leq z \leq 0.2$, and $0 \leq w \leq 0.1$.

(10) The present invention provides the method of preparing a positive electrode material of (9) above, wherein the positive electrode active material precursor represented by Formula 3 is represented by Formula 3-1.

[Formula 3-1] $\qquad [Ni_xCo_yMn_z](OH)_2$

In Formula 3-1, $0.7 \leq x < 1$, $0 < y \leq 0.2$, and $0 \leq z \leq 0.2$.

(11) The present invention provides the method of preparing a positive electrode material of (9) or (10) above, wherein, during the primary sintering of the step (S10), an $M^1$-containing raw material ($M^1$ is at least one selected from Mn and Al), an $M^2$-containing raw material ($M^2$ is at least one selected from the group consisting of Zr, B, W, Mo, Mg, Ce, Hf, Ta, Nb, La, Ti, Sr, Ba, F, P, Si, and S), or a mixture thereof is further mixed.

(12) The present invention provides the method of preparing a positive electrode material of any one of (9) to (11) above, wherein, during the secondary sintering of the step (S20), an $M^2$-containing raw material ($M^1$ is at least one selected from Mn and Al), an $M^2$-containing raw material ($M^2$ is at least one selected from the group consisting of Zr, B, W, Mo, Mg, Ce, Hf, Ta, Nb, La, Ti, Sr, Ba, F, P, Si, and S), or a mixture thereof is further mixed.

(13) The present invention provides the method of preparing a positive electrode material of any one of (9) to (12) above, wherein the primary sintering of the step (S10) is performed at a temperature of 600°C or higher and less than 800°C.

(14) The present invention provides the method of preparing a positive electrode material of any one of (9) to (13) above, wherein, after the secondary sintering of the step (S20), and before performing the step (S30), at least one of a step (S21) of washing the lithium composite transition metal oxide represented by Formula 1; and a step (S22) of forming a coating layer by mixing the lithium composite transition metal oxide represented by Formula 1 and a coating raw material containing at least one element selected from the group consisting of Al, Ti, W, B, F, P, Mg, Ni, Co, Fe, Cr, V, Cu, Ca, Zn, Zr, Nb, Mo, Sr, Sb, Bi, Si, Ta, and S and performing a heat treatment is additionally performed.

(15) The present invention provides the method of preparing a positive electrode material of (14) above, wherein the heat treatment of the step (S22) is performed at a temperature of 200°C or higher and 700°C or lower.

(16) The present invention provides a positive electrode including the positive electrode material of any one of (1) to (8).

(17) The present invention provides a lithium secondary battery including the positive electrode of (16); a negative electrode; a separator disposed between the positive electrode and the negative electrode, and an electrolyte.

## ADVANTAGEOUS EFFECTS

Since a positive electrode material of the present invention includes a high nickel (high-Ni) lithium composite transition metal oxide, it may improve long-term lifetime by reducing a side reaction with an electrolyte solution by reducing a surface area exposed after rolling through mitigation of crack generation and particle cracking while being able to ensure high capacity.

## BRIEF DESCRIPTION OF THE DRAWINGS

FIG. 1 is a cross-sectional scanning electron microscope (SEM) image of first positive electrode active material particles prepared in Example 1.

FIG. 2 is a cross-sectional scanning electron microscope (SEM) image of first positive electrode active material particles prepared in Comparative Example 1.

FIG. 3 is a cross-sectional scanning electron microscope (SEM) image of first positive electrode active material particles prepared in Comparative Example 2.

FIG. 4 is a cross-sectional scanning electron microscope (SEM) image of first positive electrode active material particles prepared in Comparative Example 3.

FIG. 5 is a graph showing particle size distributions of positive electrode material powders prepared in Example 1 and Comparative Example 1 before and after 9 ton pressing.

FIG. 6 is a graph showing capacity retentions and resistance increase rates at 45°C of mono-cells including positive electrode materials prepared in Examples 1 and 2 and Comparative Examples 1 to 3.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression 'primary particle' denotes a smallest particle unit which is distinguished as one body when a cross section of a positive electrode active material is observed through a scanning electron microscope (SEM), wherein it may be composed of a plurality of crystallites.

In the present invention, the expression 'secondary particle' denotes a secondary structure formed by aggregation of a plurality of primary particles. An average particle diameter of the secondary particle may be measured using a particle size analyzer.

The expression 'particle diameter $D_n$' in the present invention denotes a particle diameter at n% of cumulative distribution of area according to the particle diameter. That is, $D_{50}$ is a particle diameter at 50% of the cumulative distribution of area according to the particle diameter, $D_{90}$ is a particle diameter at 90% of the cumulative distribution of area according to the particle diameter, and $D_{10}$ is a particle diameter at 10% of the cumulative distribution of area according to the particle diameter. The $D_n$ may be measured by using a laser diffraction method. Specifically, after dispersing measurement target powder in a dispersion medium, the dispersion medium is introduced into a commercial laser diffraction particle size measurement instrument (e.g., Microtrac S3500) and a particle size distribution is calculated by measuring a difference in diffraction patterns due to a particle size when particles pass through a laser beam. The $D_{10}$, $D_{50}$, and $D_{90}$ may be measured by calculating particle diameters at 10%, 50%, and 90% of the cumulative distribution of area according to the particle diameter using the measurement instrument.

The expression 'average particle diameter ($D_{50}$)' in the present invention denotes a particle diameter at 50% where a maximum peak of area cumulative particle size distribution, which is measured through the laser diffraction particle size measurement instrument, appears.

**Positive Electrode Material**

The present invention provides a positive electrode material.

According to an embodiment of the present invention, the positive electrode material is a positive electrode material having a bimodal particle size distribution which includes a first positive electrode active material and a second positive electrode active material which have different average particle diameters ($D_{50}$) from each other, wherein the first positive electrode active material includes a lithium composite transition metal oxide represented by the following Formula 1, and the number of primary particles of the first positive electrode active material, which is measured in a cross-sectional SEM image of secondary particles having an average particle diameter ($D_{50}$) at which a maximum peak of area cumulative particle size distribution of the first positive electrode active material, which is measured through a laser diffraction particle size measurement instrument, appears, may be in a range of 6 or more to 30 or less.

[Formula 1] $\quad Li_aNi_xCo_yM^1_zM^2_wO_2$

In Formula 1, $M^1$ may be at least one selected from Mn and Al, $M^2$ may be at least one selected from the group consisting of Zr, B, W, Mo, Mg, Ce, Hf, Ta, Nb, La, Ti, Sr, Ba, F, P, Si, and S, and $0.9 \leq a \leq 1.1$, $0.7 \leq x < 1$, $0 < y \leq 0.2$, $0 < z \leq 0.2$, and $0 \leq w \leq 0.1$.

According to an embodiment of the present invention, since the positive electrode material includes a high nickel (high-Ni) lithium composite transition metal oxide by including the first positive electrode active material, it may improve long-term lifetime by reducing a side reaction with an electrolyte solution by reducing a surface area exposed after rolling through mitigation of crack generation and particle cracking while being able to ensure high capacity.

According to an embodiment of the present invention, in Formula 1, $M^1$ may include Mn, or Mn and Al at the same time.

According to an embodiment of the present invention, in Formula 1, $M^2$ may be at least one selected from the group consisting of Zr, B, W, Mo, Mg, Ce, Hf, Ta, Nb, La, Ti, Sr, Ba, F, P, Si, and S, and may include Zr in terms of further improving structural stability of the lithium composite transition metal oxide.

According to an embodiment of the present invention, in Formula 1, a represents a molar ratio of lithium in the lithium composite transition metal oxide, wherein a may satisfy $0.9 \leq a \leq 1.1$, $0.95 \leq a \leq 1.08$, or $1 \leq a \leq 1.08$.

According to an embodiment of the present invention, in Formula 1, x represents a molar ratio of nickel in the lithium composite transition metal oxide, wherein x may satisfy $0.7 \leq x < 1$, $0.80 \leq x \leq 0.99$, $0.80 \leq x \leq 0.95$, $0.80 \leq x \leq 0.90$, or $0.80 \leq x \leq 0.85$, and capacity characteristics may be further improved within this range.

According to an embodiment of the present invention, in Formula 1, y represents a molar ratio of cobalt in the lithium composite transition metal oxide, wherein y may satisfy $0 < y \leq 0.2$, $0 < y \leq 0.15$, or $0.01 \leq y \leq 0.10$.

According to an embodiment of the present invention, in Formula 1, z represents a molar ratio of $M^1$ in the lithium composite transition metal oxide, wherein z may satisfy $0 < z \leq 0.2$, $0 < z \leq 0.15$, or $0.01 \leq z \leq 0.15$.

According to an embodiment of the present invention, in Formula 1, w represents a molar ratio of $M^2$ in the lithium composite transition metal oxide, wherein w may satisfy $0 \leq w \leq 0.1$ or $0 \leq w \leq 0.05$.

According to an embodiment of the present invention, the lithium composite transition metal oxide represented by Formula 1 may be represented by Formula 1-1 below.

[Formula 1-1] $\quad Li_aNi_xCo_yMn_zM^2_wO_2$

In Formula 1-1, $M^2$ may be at least one selected from the group consisting of Zr, B, W, Mo, Mg, Ce, Hf, Ta, Nb, La, Ti, Sr, Ba, F, P, Si, and S, and $0.9 \leq a \leq 1.1$, $0.7 \leq x < 1$, $0 < y \leq 0.2$, $0 < z \leq 0.2$, and $0 \leq w \leq 0.1$, wherein $M^2$, a, x, y, z, and w are the same as described in Formula 1 above.

According to an embodiment of the present invention, the lithium composite transition metal oxide represented by Formula 1 may be represented by Formula 1-2 below.

[Formula 1-2] $\quad Li_aNi_xCo_yMn_{z1}Al_{z2}M^2_wO_2$

In Formula 1-2, $M^2$ may be at least one selected from the group consisting of Zr, B, W, Mo, Mg, Ce, Hf, Ta, Nb, La, Ti, Sr, Ba, F, P, Si, and S, and $0.9 \leq a \leq 1.1$, $0.7 \leq x < 1$, $0 < y \leq 0.2$, $0 < z1 \leq 0.2$, $0 < z2 \leq 0.2$, and $0 \leq w \leq 0.1$, wherein $M^2$, a, x, y, and w are the same as described in Formula 1 above.

According to an embodiment of the present invention, in Formula 1-2, z1 represents a molar ratio of manganese in the lithium composite transition metal oxide, wherein z1 may satisfy $0 < z1 \leq 0.2$, $0 < z1 \leq 0.15$, or $0.01 \leq z1 \leq 0.15$.

According to an embodiment of the present invention, in Formula 1-2, z2 represents a molar ratio of aluminum in the lithium composite transition metal oxide, wherein z2 may satisfy $0 < z2 \leq 0.2$, $0 < z2 \leq 0.15$, or $0.01 \leq z2 \leq 0.15$.

According to an embodiment of the present invention, the first positive electrode active material may include a coating layer which is formed on a surface of the lithium composite transition metal oxide and contains at least one element selected from the group consisting of Al, Ti, W, B, F, P, Mg, Ni, Co, Fe, Cr, V, Cu, Ca, Zn, Zr, Nb, Mo, Sr, Sb, Bi, Si, Ta, and S, and, in this case, a contact between the lithium composite transition metal oxide and the electrolyte solution is blocked to be able to effectively suppress transition metal dissolution and gas generation due to the side reaction with the electrolyte solution, and structural degradation of the first positive electrode active material during charge and discharge may be prevented by stabilizing a surface structure of the lithium composite transition metal oxide. As a specific example, the first positive electrode active material may include a coating layer which is formed on the surface of the lithium composite transition metal oxide and contains at least one element selected from the group consisting of Al, Co, and B, and, in this case, life characteristics may be further improved and an increase in resistance may be further suppressed.

According to an embodiment of the present invention, the number of primary particles of the first positive electrode active material, which is measured in a cross-sectional SEM image of secondary particles having an average particle diameter ($D_{50}$) at which a maximum peak of area cumulative particle size distribution of the first positive electrode active material, which is measured through a laser diffraction particle size measurement instrument, appears, may be in a range of 6 or more to 30 or less. As a specific example, the number of primary particles, which is measured in the cross-sectional SEM image of the secondary particles having an average particle diameter ($D_{50}$) at which the maximum peak of the area cumulative particle size distribution of the first positive electrode active material appears, may be 6 or more, 7 or more, 8 or more, 9 or more, 10 or more, or 11 or more, or may be 30 or less, 29 or less, 28 or less, 27 or less, 26 or less, 25 or less, 24 or less, 23 or less, 22 or less, 21 or less, 20 or less, 19 or less, 18 or less, or 17 or less, and, within this range, the long-term lifetime may be improved by reducing the side reaction with the electrolyte solution by reducing the surface area exposed after rolling through the mitigation of the crack generation and particle cracking while preventing degradation of the capacity characteristics.

According to an embodiment of the present invention, the first positive electrode active material may have a value of 'the number of primary particles/the average particle diameter ($D_{50}$)', as a ratio of the number of primary particles measured in the cross-sectional SEM image to the average particle diameter ($D_{50}$) at which the maximum peak of the area cumulative particle size distribution of the first positive electrode active material, which is measured through a laser diffraction particle size measurement instrument, appears, that is, the average particle diameter ($D_{50}$) of the secondary particles, of 1.0 or more, 1.1 or more, 1.2 or more, 1.3 or more, 1.4 or more, 1.5 or more, 1.6 or more, 1.7 or more, 1.8 or more, 1.9 or more, 2.0 or more, 2.1 or more, 2.2 or more, 2.3 or more, 2.4 or more, or 2.5 or more, or of 15.0 or less, 14.0 or less, 13.0 or less, 12.0 or less, 11.0 or less, 10.0 or less, 9.0 or less, 8.0 or less, 7.0 or less, 6.0 or less, 5.0 or less, or 4.0 or less, and, within this range, the long-term lifetime may be improved by reducing the side reaction with the electrolyte solution by reducing the surface area exposed after rolling through the mitigation of the crack generation and particle cracking while preventing the degradation of the capacity characteristics.

According to an embodiment of the present invention, the second positive electrode active material may include a lithium composite transition metal oxide represented by Formula 2 below.

[Formula 2] $\quad\quad Li_{a'}Ni_{x'}Co_{y'}M^3_{z'}M^4_{w'}O_2$

In Formula 2, $M^3$ may be at least one selected from Mn and Al, $M^4$ may be at least one selected from the group consisting of Zr, B, W, Mo, Mg, Ce, Hf, Ta, Nb, La, Ti, Sr, Ba, F, P, Si, and S, and $0.9 \leq a' \leq 1.1$, $0.8 \leq x' < 1$, $0 < y' < 0.2$, $0 < z' < 0.2$, and $0 \leq w' \leq 0.1$.

According to an embodiment of the present invention, in Formula 2, $M^3$ may include Mn, or Mn and Al at the same time.

According to an embodiment of the present invention, in Formula 2, $M^4$ may be at least one selected from the group consisting of Zr, B, W, Mo, Mg, Ce, Hf, Ta, Nb, La, Ti, Sr, Ba, F, P, Si, and S, and may include Zr in terms of further improving structural stability of the lithium composite transition metal oxide.

According to an embodiment of the present invention, in Formula 2, a' represents a molar ratio of lithium in the lithium composite transition metal oxide, wherein a' may satisfy $0.9 \leq a' \leq 1.1$, $0.95 \leq a' \leq 1.08$, or $1 \leq a' \leq 1.08$.

According to an embodiment of the present invention, in Formula 2, x' represents a molar ratio of nickel in the lithium composite transition metal oxide, wherein x' may satisfy $0.8 \leq x' < 1$, $0.80 \leq x' \leq 0.99$, $0.80 \leq x' \leq 0.95$, $0.80 \leq x' \leq 0.90$, or $0.85 \leq x' \leq 0.90$, and capacity characteristics may be further improved within this range.

According to an embodiment of the present invention, in Formula 2, y' represents a molar ratio of cobalt in the lithium composite transition metal oxide, wherein y' may satisfy $0 < y' < 0.2$, $0 < y' \leq 0.15$, or $0.01 \leq y' \leq 0.10$.

According to an embodiment of the present invention, in Formula 2, z' represents a molar ratio of $M^3$ in the lithium composite transition metal oxide, wherein z' may satisfy $0 < z' < 0.2$, $0 < z' \leq 0.15$, or $0.01 \leq z' \leq 0.15$.

According to an embodiment of the present invention, in Formula 2, w' represents a molar ratio of $M^4$ in the lithium composite transition metal oxide, wherein w' may satisfy $0 \leq w' \leq 0.1$ or $0 \leq w' \leq 0.05$.

According to an embodiment of the present invention, the lithium composite transition metal oxide represented by Formula 2 may be represented by Formula 2-1 below.

[Formula 2-1] $\quad Li_{a'}Ni_{x'}Co_{y'}Mn_{z1'}Al_{z2'}M^4_{w'}O_2$

In Formula 2-1, $M^4$ may be at least one selected from the group consisting of Zr, B, W, Mo, Mg, Ce, Hf, Ta, Nb, La, Ti, Sr, Ba, F, P, Si, and S, and $0.9 \leq a' \leq 1.1$, $0.8 \leq x' < 1$, $0 < y' < 0.2$, $0 < z1' < 0.2$, $0 < z2' < 0.2$, and $0 \leq w' \leq 0.1$, wherein $M^4$, a', x', y', and w' are the same as described in Formula 1 above.

According to an embodiment of the present invention, in Formula 2-1, z1' represents a molar ratio of manganese in the lithium composite transition metal oxide, wherein z1' may satisfy $0 < z1' \leq 0.2$, $0 < z1' \leq 0.15$, or $0.01 \leq z1' < 0.15$.

According to an embodiment of the present invention, in Formula 2-1, z2' represents a molar ratio of aluminum in the lithium composite transition metal oxide, wherein z2' may satisfy $0 < z2' \leq 0.2$, $0 < z2' \leq 0.15$, or $0.01 \leq z2' \leq 0.15$.

According to an embodiment of the present invention, the average particle diameter ($D_{50}$) of the first positive electrode active material may be smaller than the average particle diameter ($D_{50}$) of the second positive electrode active material. In this case, since a grain size, in which the number of primary particles, which is measured in the cross-sectional SEM image of the secondary particles having an average particle diameter ($D_{50}$) at which the maximum peak of the area cumulative particle size distribution of the first positive electrode active material, which is measured through a laser diffraction particle size measurement instrument, appears, is in a range of 6 or more to 30 or less, is large to include the monolith-like first positive electrode active material as small particles, the crack generation and particle cracking may be mitigated and the long-term lifetime may be improved by reducing the side reaction with the electrolyte solution by reducing the surface area exposed after rolling.

According to an embodiment of the present invention, the first positive electrode active material may have an average particle diameter ($D_{50}$) of 2 um or more and 7 um or less, as a specific example, 2 um or more, 2.5 um or more, 3 um or more, 3.5 um or more, or 4 um or more, or of 7 um or less, 6.5 um or less, 6 um or less, 5.5 um or less, 5 um or less, or 4.5 um or less. Also, the second positive electrode active material may have an average particle diameter ($D_{50}$) of greater than 7 um and equal to or less than 20 um, as a specific example, 7.5 um or more, 8 um or more, 8.5 um or more, 9 um or more, 9.5 um or more, or 10 um or more, or of 20 um or less, 19 um or less, 18 um or less, 17 um or less, 16 um or less, 15 um or less, 14 um or less, 13 um or less, 12 um or less, or 11 um or less. Within this range, a positive electrode having high packing density may be prepared by filling the first positive electrode active material between the second positive electrode active material particles, and the capacity characteristics may be further improved by including the second positive electrode active material having a large particle diameter.

According to an embodiment of the present invention, the positive electrode material may include the first positive electrode active material and the second positive electrode active material in a weight ratio of 1:99 to 50:50, 10:90 to 40:60, or 10:90 to 30:70, and, within this range, the crack generation and particle cracking may be mitigated from the first positive electrode active material, the long-term lifetime may be improved by reducing the side reaction with the electrolyte solution by reducing the surface area exposed after rolling, and the capacity characteristics may be further improved from the second positive electrode active material at the same time.

As in the present invention, if a positive electrode active material layer is prepared by using the bimodal positive electrode material including the positive electrode active materials having different average particle diameters ($D_{50}$) from each other, since the small-diameter positive electrode active material having a small average particle diameter is filled between the large-diameter positive electrode active material particles having a large average particle diameter, an electrode with high energy density may be prepared. However, with respect to a conventional bimodal positive electrode material, particle cracking of small-diameter positive electrode active material particles occurs during a positive electrode rolling process to increase a contact area with the electrolyte solution, and, as a result, there is a problem in that an amount of gas generated is increased and life characteristics are degraded. In order to improve this, a method of using a positive electrode active material in the form of a single particle, which is prepared by increasing a sintering temperature, as the small-diameter positive electrode active material may be considered, but, with respect to the positive electrode active material in the form of a single particle, there is not only a limitation in achieving high capacity due to poor capacity characteristics, but cracks may also be generated in the large-diameter positive electrode active material during the rolling process because particle strength of the small-diameter positive electrode active material is excessively increased. However, since the positive electrode material according to the present invention includes the first positive electrode active material and the second positive electrode active material in a bimodal form, the crack generation and particle cracking may be mitigated from the first positive electrode active material, the long-term lifetime may be improved by reducing the side reaction with the electrolyte solution by reducing the surface area exposed after rolling, and the capacity characteristics may be further improved from the second positive electrode active material at the same time.

According to an embodiment of the present invention, since the positive electrode material includes the first positive electrode active material and the second positive electrode active material in a bimodal form, a particle size change amount calculated by Equation 1 below may be 6.0 or less.

[Equation 1]

$$\text{Particle size change amount} = P_0 - P_1$$

In Equation 1, $P_0$ is an intensity of a maximum peak appeared in an area cumulative particle size distribution graph of the positive electrode material, and $P_1$ is an intensity of a peak appeared in a region corresponding to a particle diameter of the $P_0$ peak in an area cumulative particle size distribution graph measured after pressurizing the positive electrode material to 9 tons.

According to an embodiment of the present invention, the positive electrode material may have a particle size change amount calculated by Equation 1 of 6.0 or less, 5.9 or less, 5.8 or less, 5.7 or less, 5.6 or less, 5.5 or less, 5.4 or less, 5.3 or less, 5.2 or less, 5.1 or less, 5.0 or less, 4.9 or less, 4.8 or less, 4.7 or less, or 4.6 or less, or of 0 or more, 0.5 or more, 1.0 or more, 1.5 or more, 2.0 or more, 2.5 or more, 3.0 or more, 3.5 or more, or 4.0 or more, and, within this range, the crack generation and particle cracking due to rolling during the preparation of the positive electrode may be mitigated.

## Method of Preparing Positive Electrode Material

The present invention provides a method of preparing a positive electrode material which is for preparing the above positive electrode material.

According to an embodiment of the present invention, the method of preparing a positive electrode material may include the steps of: mixing a positive electrode active material precursor represented by the following Formula 3 and a lithium raw material and performing primary sintering to form a pre-sintered product (S10); performing secondary sintering on the pre-sintered product at a temperature of greater than 850°C and equal to or less than 890°C to form a first positive electrode active material including a lithium composite transition metal oxide represented by the following Formula 1 (S20); and mixing the first positive electrode active material with a second positive electrode active material having an average particle diameter ($D_{50}$) different from that of the first positive electrode active material (S30).

[Formula 1] $\quad\quad\quad$ $Li_aNi_xCo_yM^1{}_zM^2{}_wO_2$

In Formula 1, $M^1$ may be at least one selected from Mn and Al, $M^2$ may be at least one selected from the group consisting of Zr, B, W, Mo, Mg, Ce, Hf, Ta, Nb, La, Ti, Sr, Ba, F, P, Si, and S, and $0.9 \le a \le 1.1$, $0.7 \le x < 1$, $0 < y \le 0.2$, $0 < z \le 0.2$, and $0 \le w \le 0.1$. Herein, Formula 1 may be the same as described above.

[Formula 3] $\quad\quad\quad$ $[Ni_xCo_yM^1{}_zM^2{}_w](OH)_2$

In Formula 3, $M^1$ may be at least one selected from Mn and Al, $M^2$ may be at least one selected from the group consisting of Zr, B, W, Mo, Mg, Ce, Hf, Ta, Nb, La, Ti, Sr, Ba, F, P, Si, and S, and $0.7 \le x < 1$, $0 < y \le 0.2$, $0 < z \le 0.2$, and $0 \le w \le 0.1$.

According to an embodiment of the present invention, in Formula 3, $M^1$ may include Mn, or Mn and Al at the same time.

According to an embodiment of the present invention, in Formula 3, $M^2$ may be at least one selected from the group consisting of Zr, B, W, Mo, Mg, Ce, Hf, Ta, Nb, La, Ti, Sr, Ba, F, P, Si, and S.

According to an embodiment of the present invention, in Formula 3, x represents a molar ratio of nickel in the positive electrode active material precursor, wherein x may satisfy $0.7 \le x < 1$, $0.80 \le x \le 0.99$, $0.80 \le x \le 0.95$, $0.80 \le x \le 0.90$, or $0.80 \le x \le 0.85$, and capacity characteristics may be further improved within this range.

According to an embodiment of the present invention, in Formula 3, y represents a molar ratio of cobalt in the positive electrode active material precursor, wherein y may satisfy $0 < y \le 0.2$, $0 < y \le 0.15$, or $0.01 \le y \le 0.10$.

According to an embodiment of the present invention, in Formula 3, z represents a molar ratio of $M^1$ in the positive electrode active material precursor, wherein z may satisfy $0 < z \le 0.2$, $0 < z \le 0.15$, or $0.01 \le z \le 0.15$.

According to an embodiment of the present invention, in Formula 3, w represents a molar ratio of $M^2$ in the positive electrode active material precursor, wherein w may satisfy $0 \le w \le 0.1$ or $0 \le w \le 0.05$.

According to an embodiment of the present invention, the positive electrode active material precursor represented by Formula 3 may be represented by Formula 3-1 below.

[Formula 3-1] $\quad\quad\quad$ $[Ni_xCo_yMn_z](OH)_2$

In Formula 3-1, $0.7 \le x < 1$, $0 < y \le 0.2$, and $0 \le z \le 0.2$, and, as a specific example, x, y, and z may be the same as described in Formula 3 above.

According to an embodiment of the present invention, as the lithium raw material, lithium-containing sulfates, nitrates, acetic acid salts, carbonates, oxalates, citrates, halides, hydroxides, or oxyhydroxides may be used, and, as a specific example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $Li_3C_6H_5O_7$, or a mixture thereof may be used.

According to an embodiment of the present invention, the lithium raw material and the positive electrode active material precursor may be mixed so that a molar ratio of Li:total transition metals in the precursor is in a range of 1:1 to 1.2:1, or 1:1 to 1.1:1, and, within this range, when the mixing ratio satisfies the above range, since a crystal structure of a positive electrode active material is well developed, the positive electrode active material having excellent capacity characteristics and structural stability may be prepared.

According to an embodiment of the present invention, during the primary sintering of step (S10), an $M^1$-containing raw material ($M^1$ is at least one selected from Mn and Al), an $M^2$-containing raw material ($M^2$ is at least one selected from the group consisting of Zr, B, W, Mo, Mg, Ce, Hf, Ta, Nb, La, Ti, Sr, Ba, F, P, Si, and S), or a mixture thereof may be further mixed.

According to an embodiment of the present invention, during the secondary sintering of step (S20), an $M^2$-containing raw material ($M^1$ is at least one selected from Mn and Al), an $M^2$-containing raw material ($M^2$ is at least one selected from the group consisting of Zr, B, W, Mo, Mg, Ce, Hf, Ta, Nb, La, Ti, Sr, Ba, F, P, Si, and S), or a mixture thereof may be further mixed.

According to an embodiment of the present invention, the $M^2$-containing raw material may be $M^1$ element-containing acetic acid salts, nitrates, sulfates, halides, sulfides, hydroxides, oxides, or oxyhydroxides, and, as a specific example, the $M^2$-containing raw material may be $Mn_2O_3$, $MnO_2$, $Mn_3O_4$, $MnCO_3$, $Mn(NO_3)_2$, $MnSO_4$, manganese acetate, manganese chloride, manganese hydroxide, $Al_2O_3$, $Al(OH)_3$, $Al(NO_3)_3 \cdot 9H_2O$, or $Al_2(SO_4)_3$.

According to an embodiment of the present invention, the $M^2$-containing raw material may be $M^2$ element-containing acetic acid salts, nitrates, sulfates, halides, sulfides, hydroxides, oxides, or oxyhydroxides.

In the present invention, the $M^1$ element and the $M^2$ element may be added in a co-precipitation reaction step for preparing the positive electrode active material precursor, or may be added during the mixing with the lithium raw material, or may be added by being mixed with the pre-sintered product primarily sintered before the secondary sintering, if necessary. Also, in a case in which two or more types of elements are used as the $M^1$ element and the $M^2$ element, times of the addition of each of the $M^1$ element and the $M^2$ element may be the same or different. As a specific example, in a case in which Mn and Al are included as the $M^1$ element, Mn may be added in the precursor co-precipitation step, and Al may be added in the step of mixing with the lithium raw material, or may be added by being mixed with the pre-sintered product primarily sintered before the secondary sintering.

According to an embodiment of the present invention, the times of the addition of the $M^1$ element and the $M^2$ element may be appropriately adjusted in consideration of a final composition of the positive electrode active material to be prepared. As a specific example, in a case of in which a positive electrode active material having a Ni content of greater than 80 atm% or 80 mol% is prepared, the Al element may be added in the step of mixing with the lithium raw material rather than during the co-precipitation reaction, or in the step of mixing with the pre-sintered product primarily sintered before the secondary sintering, and, in this case, an adverse effect of crystal structure growth by Al in the co-precipitation step may be prevented.

According to an embodiment of the present invention, step (S10) may be a step for preparing a pre-sintered product by performing primary sintering after mixing the positive electrode active material precursor and the lithium raw material and mixing the $M^1$-containing raw material and/or the $M^2$-containing raw material, if necessary.

According to an embodiment of the present invention, the primary sintering of step (S10) may be performed to prevent adverse effect of by-products on the formation of the crystal structure of the positive electrode active material and prepare the positive electrode active material with excellent quality by removing the by-products, such as $CO_2$ or moisture, generated during sintering in advance by pre-sintering the positive electrode active material precursor and the lithium raw material.

According to an embodiment of the present invention, the primary sintering of step (S10) may be performed at a temperature lower than that of the secondary sintering described subsequently, as a specific example, the primary sintering may be performed at a temperature of 600°C or higher, 610°C or higher, 620°C or higher, 630°C or higher, or 640°C or higher, or may be performed at a temperature of less than 800°C, 790°C or lower, 780°C or lower, 770°C or lower, 760°C or lower, 750°C or lower, 740°C or lower, 730°C or lower, 720°C or lower, 710°C or lower, or 700°C or lower, and, within this range, the crystal structure may be developed according to the purpose by preventing crystal structure transformation in the primary sintering step in which the by-products are present, while effectively removing the by-products.

According to an embodiment of the present invention, step (S20) may be a step for forming a first positive electrode active material including the lithium composite transition metal oxide represented by Formula 1 by performing secondary sintering of the pre-sintered product.

According to an embodiment of the present invention, the secondary sintering of step (S20) may be performed at a temperature of greater than 850°C, 851°C or higher, 852°C or higher, 853°C or higher, 854°C or higher, 855°C or higher, 860°C or higher, 865°C or higher, 870°C or higher, 875°C or higher, or 880°C or higher, or may be performed at a temperature of 890°C or lower, 885°C or lower, or 880°C or lower, and, within this range, the number of primary particles, which is measured in the cross-sectional SEM image of the secondary particles having an average particle diameter ($D_{50}$) at which the maximum peak of the area cumulative particle size distribution of the first positive electrode active material including the lithium composite transition metal oxide represented by Formula 1 and formed from the secondary sintering, which is measured through a laser diffraction particle size measurement instrument, appears, may be controlled to be in a range of 6 or more to 30 or less.

According to an embodiment of the present invention, the method of preparing a positive electrode material may further include a step (S21) of washing the lithium composite transition metal oxide represented by Formula 1, after the secondary sintering of step (S20), and before performing step (S30) .

According to an embodiment of the present invention, step (S21) is to remove a lithium by-product remaining on the surface of the lithium composite transition metal oxide, wherein it may be performed through a method of washing a positive electrode active material which is known in the art. As a specific example, step (S21) may be performed by a method in which, after the lithium composite transition metal oxide and a washing solution are mixed, stirred, and then filtered to remove the washing solution, drying is performed. In this case, the drying may be performed at a temperature of 50°C or higher and 150°C or lower.

According to an embodiment of the present invention, the method of preparing a positive electrode material may further include a step (S22) of forming a coating layer on the surface of the lithium composite transition metal oxide represented by Formula 1, after the secondary sintering of step (S20), and before performing step (S30), if necessary.

According to an embodiment of the present invention, step (S22) may be performed by mixing the lithium composite transition metal oxide represented by Formula 1 and a coating raw material containing at least one element selected from the group consisting of Al, Ti, W, B, F, P, Mg, Ni, Co, Fe, Cr, V, Cu, Ca, Zn, Zr, Nb, Mo, Sr, Sb, Bi, Si, Ta, and S and then performing a heat treatment, wherein the coating raw material may be acetic acid salts, nitrates, sulfates, halides, sulfides, hydroxides, oxides, or oxyhydroxides which contain the above elements.

According to an embodiment of the present invention, the heat treatment of step (S22) may be performed at a temperature of 200°C or higher and 700°C or lower, 200°C or higher and 500°C or lower, or 240°C or higher and 400°C or lower.

According to an embodiment of the present invention, in the method of preparing a positive electrode material, any one of step (S21) or step (S22) may be performed, or both steps (S21) and (S22) may be performed, after the secondary sintering of step (S20), and before performing step (S30).

According to an embodiment of the present invention, step (S30) is a step for finally obtaining a positive electrode material by mixing the first positive electrode active material and a second positive electrode active material having an average particle diameter ($D_{50}$) different from that of the first positive electrode active material, wherein the second positive electrode active material may be the same as that described above.

According to an embodiment of the present invention, in step (S30), the first positive electrode active material and the second positive electrode active material may be mixed in the above-described weight ratio for the purpose of the present invention.

**Positive Electrode**

The present invention provides a positive electrode including the above positive electrode active material.

According to an embodiment of the present invention, the positive electrode may include a positive electrode collector and a positive electrode active material layer formed on the positive electrode collector, wherein the positive electrode active material layer may include the above positive electrode material.

According to an embodiment of the present invention, the positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

According to an embodiment of the present invention, the positive electrode active material layer may optionally include a conductive agent and a binder in addition to the positive electrode material, if necessary. In this case, the positive electrode material may be included in an amount of 80 wt% to 99 wt%, for example, 85 wt% to 98.5 wt% based on a total weight of the positive electrode active material layer, and excellent capacity characteristics may be obtained within this range.

According to an embodiment of the present invention, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

According to an embodiment of the present invention, the binder improves the adhesion between positive electrode material particles and the adhesion between the positive electrode material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 0.1 wt% to 15 wt% based on the total weight of the positive electrode active material layer.

According to an embodiment of the present invention, the positive electrode may be prepared according to a typical method of preparing a positive electrode except that the above-described positive electrode material is used. Specifically, a composition for forming a positive electrode active material layer, which is prepared by dissolving or dispersing the positive electrode material as well as optionally the binder, the conductive agent, and a dispersant in a solvent, is coated on the positive electrode collector, and the positive electrode may then be prepared by drying and rolling the coated positive electrode collector, or the positive electrode may be prepared by casting the composition for forming a positive electrode active material layer on a separate support and then laminating a film separated from the support on the positive electrode collector.

According to an embodiment of the present invention, the solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

### Lithium Secondary Battery

The present invention provides a lithium secondary battery including the above positive electrode.

According to an embodiment of the present invention, the lithium secondary battery may include the positive electrode; a negative electrode; a separator disposed between the positive electrode and the negative electrode, and an electrolyte. Also, the lithium secondary battery may further optionally include a battery container accommodating an electrode assembly of the positive electrode, the negative electrode, and the separator, and a sealing member sealing the battery container.

According to an embodiment of the present invention, the negative electrode may include a negative electrode collector and a negative electrode active material layer disposed on the negative electrode collector.

According to an embodiment of the present invention, the negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

According to an embodiment of the present invention, the negative electrode active material layer may optionally include a binder and a conductive agent in addition to the negative electrode active material.

According to an embodiment of the present invention, a compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiOp(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes. The negative electrode active material may be included in an amount of 80 wt% to 99 wt% based on a total weight of the negative electrode active material layer.

According to an embodiment of the present invention, the binder of the negative electrode active material layer is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

According to an embodiment of the present invention, the conductive agent of the negative electrode active material layer is a component for further improving conductivity of the negative electrode active material, wherein the conductive agent may be added in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

According to an embodiment of the present invention, the negative electrode may be prepared by coating a composition for forming a negative electrode active material layer, which is prepared by dissolving or dispersing optionally the binder and the conductive agent as well as the negative electrode active material in a solvent, on the negative electrode collector and drying the coated negative electrode collector, or may be prepared by casting the composition for forming a negative electrode active material layer on a separate support and then laminating a film separated from the support on the negative electrode collector.

According to an embodiment of the present invention, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto. As a specific example, the electrolyte may include an organic solvent and a lithium salt.

According to an embodiment of the present invention, any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

According to an embodiment of the present invention, the lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. If the concentration of the lithium salt is included within the above range, since the electrolyte may have appropriate conductivity and viscosity, excellent performance of the electrolyte may be obtained and lithium ions may effectively move.

According to an embodiment of the present invention, in order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 5 wt% based on a total weight of the electrolyte.

Since the lithium secondary battery including the positive electrode active material according to the present invention stably exhibits excellent capacity characteristics, output characteristics, and life characteristics, the lithium secondary battery is suitable for portable devices, such as mobile phones, notebook computers, and digital cameras, and electric cars such as hybrid electric vehicles (HEVs) and electric vehicles (EVs).

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Thus, according to an embodiment of the present invention, a battery module including the lithium secondary battery as a unit cell and a battery pack including the battery module are provided.

According to an embodiment of the present invention, the battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

**Examples**

**Example 1**

<Preparation of First Positive Electrode Active Material>

After a $LiOH \cdot H_2O$ lithium raw material and a $Ni_{0.83}Co_{0.05}Mn_{0.12}(OH)_2$ positive electrode active material precursor ($D_{50}$=4.6 um) were mixed so that a molar ratio of Li:transition metals (Ni+Co+Mn) in the precursor was 1.06:1 and $ZrO_2$ was additionally mixed, sintering was performed at 640°C for 5 hours to prepare a pre-sintered product. In this case, the $ZrO_2$ was mixed in an amount such that a concentration of Zr was 1,000 ppm based on a total weight of the pre-sintered product. Thereafter, secondary sintering was performed on the pre-sintered product at 880°C for 6 hours to prepare a $LiNi_{0.83}Co_{0.05}Mn_{0.12}O_2$ lithium composite transition metal oxide containing Zr.

100 g of the above-prepared lithium composite transition metal oxide and 120 g of water were mixed and washed by stirring for 5 minutes, and the mixture was separation filtered with a filter press so that a water content in the washed product was in a range of 5% to 10% and then dried at 130°C. Subsequently, the washed and dried lithium composite transition metal oxide and $H_3BO_3$ were mixed in a weight ratio of 100:0.286, and heat-treated at 300°C for 4 hours to prepare a positive electrode active material on which a B solid solution was coated.

<Preparation of Positive Electrode Material>

A positive electrode material was prepared by mixing the above-prepared positive electrode active material and a $LiNi_{0.86}Co_{0.05}Mn_{0.07}Al_{0.02}O_2$ positive electrode active material having an average particle diameter ($D_{50}$) of 10 um in a weight ratio of 2:8.

**Example 2**

<Preparation of First Positive Electrode Active Material>

After a $LiOH \cdot H_2O$ lithium raw material and a $Ni_{0.83}Co_{0.05}Mn_{0.12}(OH)_2$ positive electrode active material precursor ($D_{50}$=4.6 um) were mixed so that a molar ratio of Li:transition metals (Ni+Co+Mn) in the precursor was 1.06:1 and $ZrO_2$ was additionally mixed, sintering was performed at 640°C for 5 hours to prepare a pre-sintered product. In this case, the $ZrO_2$ was mixed in an amount such that a concentration of Zr was 1,000 ppm based on a total weight of the pre-sintered product. Thereafter, after additionally mixing $Al(OH)_3$ with the pre-sintered product so that a concentration of Al was 600 ppm based on a weight of the pre-sintered product, secondary sintering was performed on the pre-sintered product at 880°C for 6 hours to prepare a $LiNi_{0.83}Co_{0.05}Mn_{0.12}O_2$ lithium composite transition metal oxide containing Zr and Al.
100 g of the above-prepared lithium composite transition metal oxide and 120 g of water were mixed and washed by stirring for 5 minutes, and the mixture was separation filtered with a filter press so that a water content in the washed product was in a range of 5% to 10% and then dried at 130°C. Subsequently, the washed and dried lithium composite transition metal oxide and $H_3BO_3$ were mixed in a weight ratio of 100:0.286, and heat-treated at 300°C for 4 hours to prepare a positive electrode active material on which a B solid solution was coated.

<Preparation of Positive Electrode Material>

A positive electrode material was prepared by mixing the above-prepared positive electrode active material and a $LiNi_{0.86}Co_{0.05}Mn_{0.07}Al_{0.02}O_2$ positive electrode active material having an average particle diameter ($D_{50}$) of 10 um in a weight ratio of 2:8.

**Comparative Example 1**

A positive electrode material was prepared in the same manner as in Example 1 except that the secondary sintering was performed at 800°C in Example 1.

**Comparative Example 2**

A positive electrode material was prepared in the same manner as in Example 1 except that the secondary sintering was performed at 840°C in Example 1.

**Comparative Example 3**

A positive electrode material was prepared in the same manner as in Example 1 except that the secondary sintering was performed at 900°C in Example 1.

**Experimental Examples**

**Experimental Example 1: Average Particle Diameter Measurement and Cross-sectional SEM Imaging of the First Positive Electrode Active Material**

After 0.5 g of each of the first positive electrode active material powders prepared in Examples 1 and 2 and Comparative Examples 1 to 3 was dispersed in water to which a small amount of sodium hexametaphosphate (($NaPO_3)_6$) was added, an average particle diameter ($D_{50}$) of the first positive electrode active material particles was measured using a laser diffraction particle size measurement instrument (Microtrac S-3500), and the results thereof are presented in Table 1. In this case, the average particle diameter ($D_{50}$) of the first positive electrode active material particles means an average particle diameter of secondary particles.

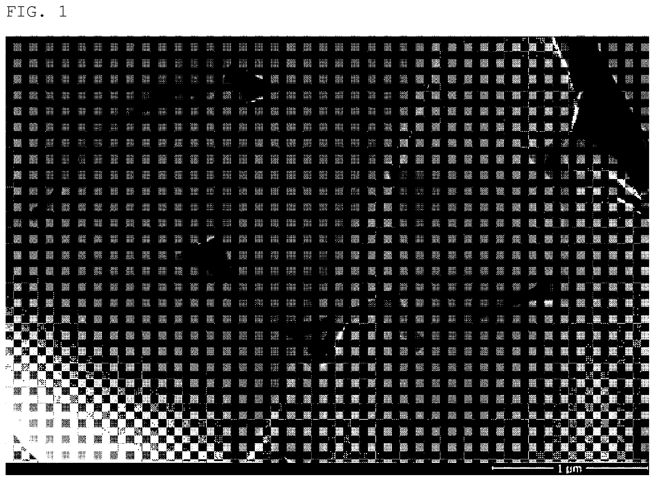

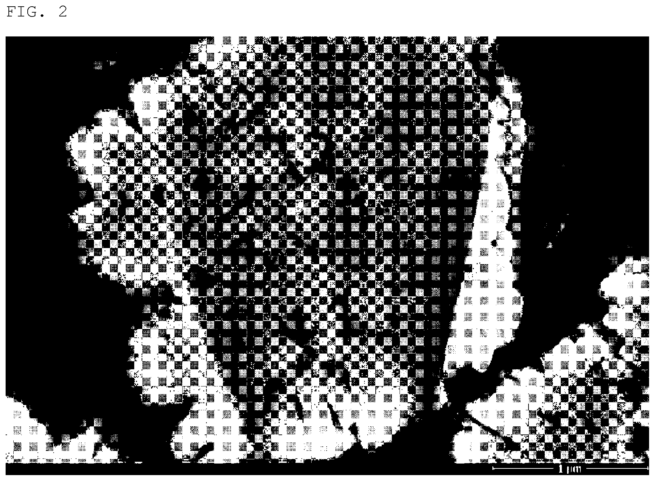

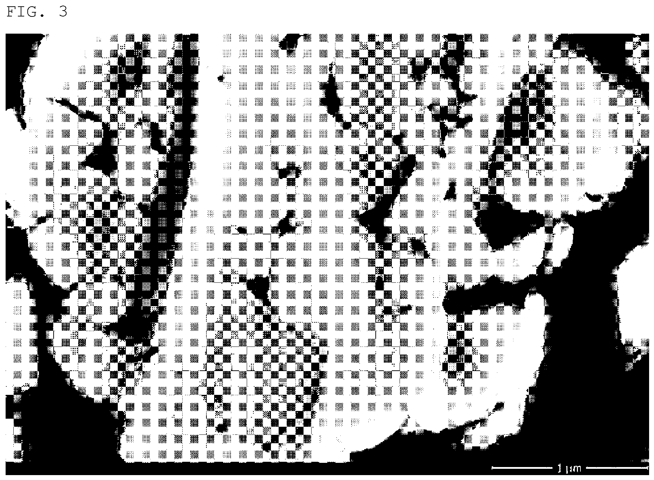

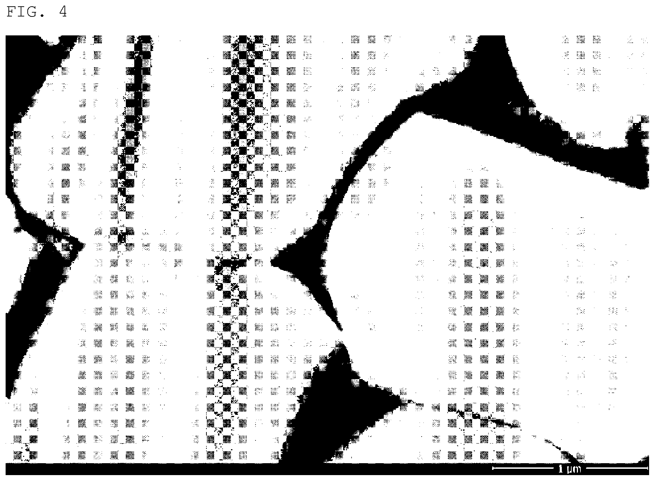

Also, after 10 g of positive electrode active material particles was collected from each of the first positive electrode active material powders prepared in Examples 1 and 2 and Comparative Examples 1 to 3 and cross sections thereof were cut using an ion milling system (Hitachi, Ltd., IM4000), cross-sectional SEM images of the secondary particles having the measured average particle diameter ($D_{50}$) were obtained using a scanning electron microscope. The obtained cross-sectional SEM images were analyzed to measure the number of primary particles in the cross section of each positive electrode active material, an average value thereof was calculated, and the results thereof are presented in Table 1. A cross-sectional SEM image of a sample collected from the positive electrode active material powder of Example 1 was illustrated in FIG. 1, a cross-sectional SEM image of a sample collected from the positive electrode active material powder of Comparative Example 1 was illustrated in FIG. 2, a cross-sectional SEM image of a sample collected from the positive electrode active material powder of Comparative Example 2 was illustrated in FIG. 3, and a cross-sectional SEM image of a sample collected from the positive electrode active material powder of Comparative Example 3 was illustrated in FIG. 4.

[Table 1]

| Category | Examples | | Comparative Examples | | |
|---|---|---|---|---|---|
| | 1 | 2 | 1 | 2 | 3 |
| Average particle diameter ($D_{50}$, $\mu$m) | 4.28 | 4.30 | 4.66 | 4.93 | 4.87 |
| The number of primary particles in the cross-sectional SEM image | 11 | 17 | 136 | 75 | 3 |
| The number of primary particles/average particle diameter ($D_{50}$) | 2.57 | 3.95 | 29.18 | 15.21 | 0.61 |

As shown in Table 1 and FIGS. 1 to 4, with respect to the first positive electrode active materials prepared in Examples 1 and 2 according to the present invention, the number of primary particles in the cross-sectional SEM image of the secondary particles having the average particle diameter ($D_{50}$) of the secondary particles is in a range limited in the present invention, but, with respect to Comparative Examples 1 and 2, the number of primary particles was greater than 30, an upper limit, and, with respect to Comparative Example 3, it may be confirmed that the number of primary particles did not reach 6, a lower limit.

**Experimental Example 2: Measurement of Particle Size Change Amount of the Positive Electrode Material**

After 0.5 g of each of the positive electrode material powders prepared in Examples 1 and 2 and Comparative Examples 1 to 3 was dispersed in water to which a small amount of sodium hexametaphosphate (($NaPO_3)_6$) was added, an area cumulative particle size distribution of each positive electrode material was measured using a laser diffraction particle size measurement instrument (Microtrac S-3500) .

Thereafter, after 2 g of the positive electrode material powder was collected and pressed at a pressure of 9 tons, the pressed positive electrode material powder was dispersed in water to which a small amount of sodium hexametaphosphate (($NaPO_3)_6$) was added, and an area cumulative particle size distribution of the positive electrode material after the 9 tons pressing was then measured using a laser diffraction particle size measurement instrument (Microtrac S-3500) .

Using the particle size distribution measurement results before and after the pressing, a particle size change amount was calculated according to Equation 1 below, and the results thereof are presented in Table 2.

[Equation 1]

$$\text{Particle size change amount} = P_0 - P_1$$

In Equation 1, $P_0$ is an intensity of a maximum peak appeared in an area cumulative particle size distribution graph of the positive electrode material, and $P_1$ is an intensity of a peak appeared in a region corresponding to a particle diameter of the $P_0$ peak in an area cumulative particle size distribution graph measured after pressurizing the positive electrode material to 9 tons.

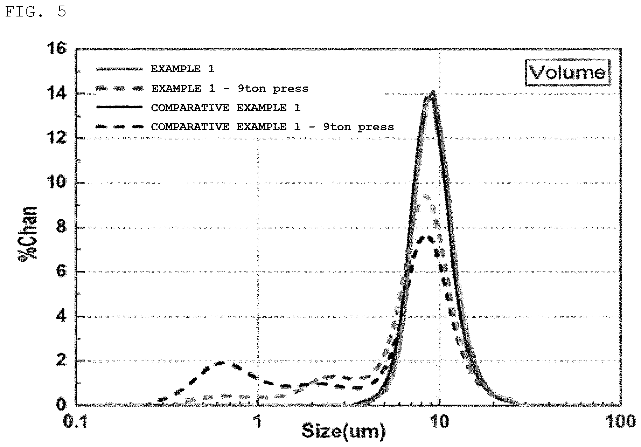

A graph showing the area cumulative particle size distributions before and after the pressing of the positive electrode material powders of Example 1 and Comparative Example 1 was illustrated in FIG. 5.

[Table 2]

| Category | Examples | | Comparative Examples | | |
|---|---|---|---|---|---|
| | 1 | 2 | 1 | 2 | 3 |
| $P_0$(%) | 14.1 | 14.0 | 14.0 | 14.1 | 14.1 |
| $P_1$(%) | 9.5 | 9.4 | 7.8 | 8.0 | 9.4 |
| Particle size change amount ($P_0$- $P_1$) | 4.6 | 4.6 | 6.2 | 6.1 | 4.7 |

As shown in Table 2 and FIG. 5, it may be confirmed that the positive electrode materials respectively including the first positive electrode active materials prepared in Examples 1 and 2 according to the present invention exhibited a small particle size change amount. In contrast, it may be confirmed that the positive electrode materials respectively including the first positive electrode active materials prepared in Comparative Examples 1 and 2 exhibited a large particle size change amount.

**Experimental Example 3: High-temperature Lifetime Evaluation**

Each of the positive electrode materials prepared in Examples 1 and 2 and Comparative Examples 1 to 3, Denka Black as a conductive agent, and PVDF, as a binder, were mixed in an N-methyl-2-pyrrolidone (NMP) solvent at a weight ratio of 97.5:1.15:1.35 to prepare a positive electrode slurry. An aluminum current collector was coated with the positive electrode slurry, dried, and then rolled to prepare a positive electrode.

Next, natural graphite and artificial graphite as a negative electrode active material, carbon black as a conductive agent, and SBR and CMC, as a binder, were mixed in water at a weight ratio of 95:1.5:3.5 to prepare a negative electrode slurry. A copper current collector was coated with the negative electrode slurry, dried, and then rolled to prepare a negative electrode.

Each mono-cell was prepared by preparing an electrode assembly by disposing a separator between the positive electrode and the negative electrode, disposing the electrode assembly in a battery case, and then injecting an electrolyte solution. In this case, as the electrolyte solution, an electrolyte solution, in which 0.7 M $LiPF_6$ and 0.3 M LiFSI were dissolved in an organic solvent in which ethylene carbonate:ethyl methyl carbonate:diethyl carbonate were mixed in a volume ratio of 3:3:4, was used, and the electrolyte solution was injected so that an amount thereof was 100 $\mu\ell$ per electrode. Formation was performed on the prepared mono-cell, and initial gas was removed to prepare a mono-cell for high-temperature lifetime evaluation.

The prepared mono-cell was charged at a constant current of 0.33 C and discharged at a constant current of 0.33 C at 25°C to measure initial capacity and resistance. Thereafter, charging at a constant current of 0.33 C and discharging at a constant current of 0.33 C in a chamber at 45°C were set as one cycle, charging and discharging were continuously performed, and capacity retentions and resistance increase rates relative to the initial capacity and resistance were measured by charging the mono-cell at a constant current of 0.33 C and discharging the mono-cell at a constant current of 0.33 C in a chamber at 25°C every 100 cycles and presented in Table 3 below.

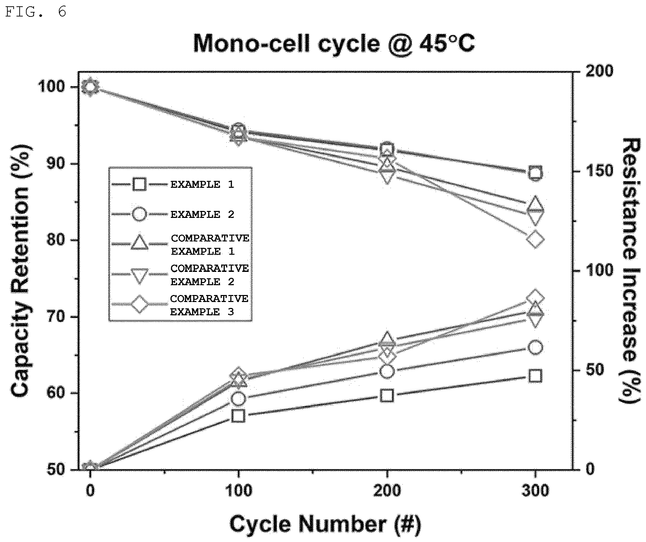

A graph showing the capacity retentions and resistance increase rates of the mono-cells including the positive electrode materials of Examples 1 and 2 and Comparative Examples 1 to 3 was illustrated in FIG. 6.

[Table 3]

| Category | 100 cycles | | 200 cycles | | 300 cycles | |
|---|---|---|---|---|---|---|
| | Capacity retention (%) | Resistance increase rate (%) | Capacity retention (%) | Resistance increase rate (%) | Capacity retention (%) | Resistance increase rate (%) |
| Example 1 | 94.13 | 27.19 | 91.77 | 37.21 | 88.87 | 47.18 |
| Example 2 | 94.36 | 35.68 | 91.97 | 49.45 | 88.67 | 61.57 |
| Comparative Example 1 | 93.63 | 44.36 | 89.60 | 64.90 | 84.57 | 80.12 |
| Comparative Example 2 | 93.60 | 45.33 | 88.55 | 61.41 | 83.10 | 76.28 |
| Comparative Example 3 | 93.54 | 47.18 | 90.71 | 56.96 | 80.12 | 86.35 |

As shown in Table 3 and FIG. 6, with respect to the mono-cells including the positive electrode materials prepared in Examples 1 and 2 according to the present invention, it may be confirmed that a decrease in capacity retention according to an increase in the number of cycles was small and resistance increase rates were mitigated. The reason for this is that, since the particle size change amount of the positive electrode material was small by adjusting the number of primary particles in the cross-sectional SEM image of the secondary particles having the average particle diameter ($D_{50}$) of the secondary particles to the range limited in the present invention, the crack generation and particle cracking were mitigated accordingly to reduce the surface area exposed after rolling, and thus, the side reaction with the electrolyte solution was reduced.

In contrast, with respect to the mono-cells including the positive electrode materials containing the first positive electrode active materials prepared in Comparative Examples 1 and 2, in which the number of primary particles in the cross-sectional SEM image of the secondary particles having the average particle diameter ($D_{50}$) of the secondary particles was greater than 30, the upper limit of the range limited in the present invention, and the mono-cell including the positive electrode material containing the first positive electrode active material prepared in Comparative Example 3 in which the number of primary particles in the cross-sectional SEM image of the secondary particles having the average particle diameter ($D_{50}$) of the secondary particles did not reach 6, the lower limit of the range limited in the present invention, it may be confirmed that a decrease in capacity retention according to an increase in the number of cycles was increased in comparison to that of the examples and resistance increase rates were also rapidly increased. With respect to Comparative Examples 1 and 2, particle cracking occurred in the first positive electrode active material particles to increase a contact area with the electrolyte solution, and, with respect to Comparative Example 3, capacity characteristics itself were poor, and it was expected that life characteristics were degraded by rather inducing cracks in the second positive electrode active material.

From these results, it may be confirmed that, since the positive electrode material of the present invention includes the high nickel (high-Ni) lithium composite transition metal oxide, it may improve the long-term lifetime by reducing the side reaction with the electrolyte solution by reducing the surface area exposed after rolling through the mitigation of the crack generation and particle cracking while being able to ensure high capacity.

## Claims

1. A positive electrode material having a bimodal particle size distribution which comprises a first positive electrode active material and a second positive electrode active material which have different average particle diameters ($D_{50}$) from each other,

   wherein the first positive electrode active material comprises a lithium composite transition metal oxide represented by Formula 1, and
   a number of primary particles of the first positive electrode active material, which is measured in a cross-sectional SEM image of secondary particles having an average particle diameter ($D_{50}$) at which a maximum peak of area cumulative particle size distribution of the first positive electrode active material, which is measured through a laser diffraction particle size measurement instrument, appears, is in a range of 6 or more to 30 or less:

   $$[\text{Formula 1}] \qquad Li_aNi_xCo_yM^1{}_zM^2{}_wO_2$$

   wherein, in Formula 1,

   $M^1$ is at least one selected from Mn and Al,
   $M^2$ is at least one selected from the group consisting of Zr, B, W, Mo, Mg, Ce, Hf, Ta, Nb, La, Ti, Sr, Ba, F, P, Si, and S, and

   $$0.9 \leq a \leq 1.1, \ 0.7 \leq x < 1, \ 0 < y \leq 0.2, \ 0 < z \leq 0.2, \ \text{and} \ 0 \leq w \leq 0.1.$$

2. The positive electrode material of claim 1, wherein the lithium composite transition metal oxide represented by Formula 1 is represented by Formula 1-1:

   $$[\text{Formula 1-1}] \qquad Li_aNi_xCo_yMn_zM^2{}_wO_2$$

   wherein, in Formula 1-1,
   $M^2$ is at least one selected from the group consisting of Zr, B, W, Mo, Mg, Ce, Hf, Ta, Nb, La, Ti, Sr, Ba, F, P, Si, and S, and

$$0.9 \le a \le 1.1, \quad 0.7 \le x < 1, \quad 0 < y \le 0.2, \quad 0 < z \le 0.2, \quad \text{and} \quad 0 \le w \le 0.1.$$

3. The positive electrode material of claim 1, wherein the first positive electrode active material comprises a coating layer which is formed on a surface of the lithium composite transition metal oxide and contains at least one element selected from the group consisting of Al, Ti, W, B, F, P, Mg, Ni, Co, Fe, Cr, V, Cu, Ca, Zn, Zr, Nb, Mo, Sr, Sb, Bi, Si, Ta, and S.

4. The positive electrode material of claim 1, wherein the second positive electrode active material comprises a lithium composite transition metal oxide represented by Formula 2:

[Formula 2] $\quad Li_{a'}Ni_{x'}Co_{y'}M^3_{z'}M^4_{w'}O_2$

wherein, in Formula 2,

$M^3$ is at least one selected from Mn and Al,
$M^4$ is at least one selected from the group consisting of Zr, B, W, Mo, Mg, Ce, Hf, Ta, Nb, La, Ti, Sr, Ba, F, P, Si, and S, and

$$0.9 \le a' \le 1.1, \quad 0.8 \le x' < 1, \quad 0 < y' < 0.2, \quad 0 < z' < 0.2, \quad \text{and} \quad 0 \le w' \le 0.1.$$

5. The positive electrode material of claim 1, wherein the average particle diameter ($D_{50}$) of the first positive electrode active material is smaller than the average particle diameter ($D_{50}$) of the second positive electrode active material.

6. The positive electrode material of claim 1, wherein the first positive electrode active material has an average particle diameter ($D_{50}$) of 2 um or more and 7 um or less.

7. The positive electrode material of claim 1, wherein the second positive electrode active material has an average particle diameter ($D_{50}$) of greater than 7 um and 20 um or less.

8. The positive electrode material of claim 1, wherein the positive electrode material has a particle size change amount calculated by Equation 1 of 6.0 or less:

$$[\text{Equation 1}]$$

$$\text{Particle size change amount} = P_0 - P_1$$

wherein, in Equation 1,

$P_0$ is an intensity of a maximum peak appeared in an area cumulative particle size distribution graph of the positive electrode material, and
$P_1$ is an intensity of a peak appeared in a region corresponding to a particle diameter of the $P_0$ peak in an area cumulative particle size distribution graph measured after pressurizing the positive electrode material to 9 tons.

9. A method of preparing a positive electrode material, the method comprising steps of:

mixing a positive electrode active material precursor represented by Formula 3 and a lithium raw material and performing primary sintering to form a pre-sintered product (S10);
performing secondary sintering on the pre-sintered product at a temperature of greater than 850°C and equal to or less than 890°C to form a first positive electrode active material including a lithium composite transition metal oxide represented by Formula 1 (S20); and
mixing the first positive electrode active material with a second positive electrode active material having an average particle diameter ($D_{50}$) different from that of the first positive electrode active material (S30):

[Formula 1]     $Li_aNi_xCo_yM^1_zM^2_wO_2$

wherein, in Formula 1,

$M^1$ is at least one selected from manganese (Mn) and aluminum (Al),
$M^2$ is at least one selected from the group consisting of Zr, B, W, Mo, Mg, Ce, Hf, Ta, Nb, La, Ti, Sr, Ba, F, P, Si, and S, and

$$0.9 \leq a \leq 1.1, \quad 0.7 \leq x < 1, \quad 0 < y \leq 0.2, \quad 0 < z \leq 0.2, \quad \text{and} \quad 0 \leq w \leq 0.1,$$

[Formula 3]     $[Ni_xCo_yM^1_zM^2_w](OH)_2$

wherein, in Formula 3,

$M^1$ is at least one selected from Mn and Al,
$M^2$ is at least one selected from the group consisting of Zr, B, W, Mo, Mg, Ce, Hf, Ta, Nb, La, Ti, Sr, Ba, F, P, Si, and S, and

$$0.7 \leq x < 1, \quad 0 < y \leq 0.2, \quad 0 \leq z \leq 0.2, \quad \text{and} \quad 0 \leq w \leq 0.1.$$

10. The method of claim 9, wherein the positive electrode active material precursor represented by Formula 3 is represented by Formula 3-1:

[Formula 3-1]     $[Ni_xCo_yMn_z](OH)_2$

wherein, in Formula 3-1, $0.7 \leq x < 1$, $0 < y \leq 0.2$, and $0 \leq z \leq 0.2$.

11. The method of claim 9, wherein, during the primary sintering of the step (S10), an $M^1$-containing raw material ($M^1$ is at least one selected from Mn and Al), an $M^2$-containing raw material ($M^2$ is at least one selected from the group consisting of Zr, B, W, Mo, Mg, Ce, Hf, Ta, Nb, La, Ti, Sr, Ba, F, P, Si, and S), or a mixture thereof is further mixed.

12. The method of claim 9, wherein, during the secondary sintering of the step (S20), an $M^2$-containing raw material ($M^1$ is at least one selected from Mn and Al), an $M^2$-containing raw material ($M^2$ is at least one selected from the group consisting of Zr, B, W, Mo, Mg, Ce, Hf, Ta, Nb, La, Ti, Sr, Ba, F, P, Si, and S), or a mixture thereof is further mixed.

13. The method of claim 9, wherein the primary sintering of the step (S10) is performed at a temperature of 600°C or higher and less than 800°C.

14. The method of claim 9, wherein, after the secondary sintering of the step (S20), and before performing the step (S30),

at least one of a step (S21) of washing the lithium composite transition metal oxide represented by Formula 1; and a step (S22) of forming a coating layer by mixing the lithium composite transition metal oxide represented by Formula 1 and a coating raw material containing at least one element selected from the group consisting of Al, Ti, W, B, F, P, Mg, Ni, Co, Fe, Cr, V, Cu, Ca, Zn, Zr, Nb, Mo, Sr, Sb, Bi, Si, Ta, and S and performing a heat treatment is additionally performed.

15. The method of claim 14, wherein the heat treatment of the step (S22) is performed at a temperature of 200°C or higher and 700°C or lower.

16. A positive electrode comprising the positive electrode material of any one of claims 1 to 8.

17. A lithium secondary battery comprising the positive electrode of claim 16; a negative electrode; a separator disposed between the positive electrode and the negative electrode, and an electrolyte.

FIG. 1

FIG. 2

FIG. 3

FIG. 4

1 μm

FIG. 5

FIG. 6

Mono-cell cycle @ 45°C

<div align="center">

**INTERNATIONAL SEARCH REPORT**

</div>

| International application No. |
| --- |
| **PCT/KR2022/012295** |

**A. CLASSIFICATION OF SUBJECT MATTER**

**H01M 4/36**(2006.01)i; **H01M 4/525**(2010.01)i; **H01M 4/505**(2010.01)i; **H01M 4/62**(2006.01)i; **H01M 10/052**(2010.01)i; **C01G 53/00**(2006.01)i

According to International Patent Classification (IPC) or to both national classification and IPC

**B. FIELDS SEARCHED**

Minimum documentation searched (classification system followed by classification symbols)

H01M 4/36(2006.01); H01M 10/052(2010.01); H01M 10/0525(2010.01); H01M 4/485(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 바이모달(bimodal), 양극재(cathode active material), 전이금속 산화물(transition metal oxide), 1차 입자(primary particle)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2018-0010123 A (SAMSUNG SDI CO., LTD.) 30 January 2018 (2018-01-30)<br>  See claims 1, 6 and 11-14; and paragraphs [0092] and [0137]. | 1-7,9-17 |
| A | | 8 |
| Y | KR 10-2020-0070650 A (LG CHEM, LTD.) 18 June 2020 (2020-06-18)<br>  See claims 1 and 4-6; and paragraph [0083]. | 1-7,9-17 |
| Y | KR 10-2020-0001893 A (LG CHEM, LTD.) 07 January 2020 (2020-01-07)<br>  See claim 8. | 11-12 |
| A | KR 10-2020-0047116 A (LG CHEM, LTD.) 07 May 2020 (2020-05-07)<br>  See entire document. | 1-17 |
| A | KR 10-2020-0064799 A (POSCO et al.) 08 June 2020 (2020-06-08)<br>  See entire document. | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 November 2022** | **18 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

| | International application No. |
|---|---|
| | **PCT/KR2022/012295** |

| Patent document cited in search report | | | Publication date (day/month/year) | Patent family member(s) | | | Publication date (day/month/year) |
|---|---|---|---|---|---|---|---|
| KR | 10-2018-0010123 | A | 30 January 2018 | CN | 107644982 | A | 30 January 2018 |
| | | | | CN | 107644982 | B | 11 May 2021 |
| | | | | JP | 2020-064849 | A | 23 April 2020 |
| | | | | JP | 6991184 | B2 | 15 February 2022 |
| | | | | KR | 10-2307908 | B1 | 05 October 2021 |
| KR | 10-2020-0070650 | A | 18 June 2020 | CN | 113169320 | A | 23 July 2021 |
| | | | | EP | 3869590 | A1 | 25 August 2021 |
| | | | | EP | 3869590 | A4 | 19 January 2022 |
| | | | | JP | 2022-508147 | A | 19 January 2022 |
| | | | | KR | 10-2453274 | B1 | 11 October 2022 |
| | | | | US | 2022-0059832 | A1 | 24 February 2022 |
| | | | | WO | 2020-122497 | A1 | 18 June 2020 |
| KR | 10-2020-0001893 | A | 07 January 2020 | CN | 112106235 | A | 18 December 2020 |
| | | | | EP | 3780174 | A1 | 17 February 2021 |
| | | | | EP | 3780174 | A4 | 09 June 2021 |
| | | | | JP | 2021-523529 | A | 02 September 2021 |
| | | | | JP | 2022-159384 | A | 17 October 2022 |
| | | | | KR | 10-2288296 | B1 | 10 August 2021 |
| | | | | US | 2021-0218021 | A1 | 15 July 2021 |
| | | | | WO | 2020-004988 | A1 | 02 January 2020 |
| KR | 10-2020-0047116 | A | 07 May 2020 | CN | 112840486 | A | 25 May 2021 |
| | | | | EP | 3843181 | A1 | 30 June 2021 |
| | | | | EP | 3843181 | A4 | 17 November 2021 |
| | | | | JP | 2022-501789 | A | 06 January 2022 |
| | | | | US | 2022-0037658 | A1 | 03 February 2022 |
| | | | | WO | 2020-085731 | A1 | 30 April 2020 |
| KR | 10-2020-0064799 | A | 08 June 2020 | KR | 10-2178808 | B1 | 13 November 2020 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210112328
- KR 1020140018685 A